# EUROPEAN PATENT APPLICATION

(11) **EP 4 394 299 A1**
(43) Date of publication of application: **03.07.2024**
(21) Application number: 22217332.0
(22) Date of filing: 30.12.2022
(51) Int. Cl.: F27B 1/00, C04B 2/08, F27B 1/08, F27D 17/00, F27D 99/00

(54) **PROCESS FOR CALCINING CARBONATED MINERAL STONES IN AN ANNULAR VERTICAL KILN AND IMPLEMENTED KILN**

(71) Applicant: S.A. LHOIST RECHERCHE ET DEVELOPPEMENT, 1342 Ottignies-Louvain-la-Neuve (BE)
(72) Inventor: HABIB, Ziad, 1630 Linkebeek (BE)
(74) Representative: Calysta NV

(57) **Abstract**

Annular shaft kiln for calcining carbonated mineral stones, comprising an outer cylinder (1), an inner cylinder (2), forming an annular space (3) with the outer cylinder (1), material inlet means (4) for feeding said carbonated mineral stones at the top of the kiln into the annular space (3), material discharge means (5) at the bottom of the kiln for discharging the decarbonated calcined material, upper gas injection means at a first level of the annular space, provided for injecting an upper hot gas, lower gas injection means at a second level of the annular space lower than the level of the first gas injection means, provided for injecting a lower hot gas, said kiln being equipped with at least one plasma torch (18) for heating a gas and with, as lower gas injection means, at least one lower mixing chamber (7) wherein the heated gas is mixed with a control gas for providing a gaseous mixture which is said lower hot gas to inject having a controlled temperature equal or higher than the temperature of calcination of the loaded mineral stones, and process implemented in such a kiln.

## Description

The present invention relates to a process for calcining carbonated mineral stones in an annular shaft kiln (ASK), having an outer cylinder and an inner cylinder forming an annular space between them. Such a process is known and comprises
- a loading step of carbonated mineral stones at the top of the kiln,
- an injection of an upper hot gas into the annular space at a first level thereof,
- an injection of a lower hot gas into the annular space at a second level lower than the first level,
- a preheating step in a preheating zone of said loaded carbonated mineral stones flowing downwardly in the annular space,
- a calcining step of said preheated carbonated mineral stones in a calcination zone located in the annular space below the preheating zone, said preheating and calcining steps of said carbonated mineral stones flowing downwardly in the annular space taking place successively in contact with the upper hot gas and the lower hot gas which are at least partially submitted to an upwards draft in counter-current of the carbonated mineral stones and exhausted from the top of the kiln under the form of a gaseous effluent,
- an introduction of cooling air at the bottom of the kiln,
- a cooling step in a cooling zone below the calcination zone of decarbonated calcined material flowing downwardly, with cooling air flowing in counter-current through said decarbonated calcined material and forming a heated cooling air,
- an aspiration step of said heated cooling air into the inner cylinder at a third level lower than said second level, under the form of a gaseous stream containing said heated cooling air,
- a recirculation of the gaseous stream containing said heated cooling air from the inner cylinder to said injection step of a lower hot gas, and
- a discharging step of the decarbonated calcined material from the bottom of the kiln.

According to the invention, carbonated mineral stones particularly mean calcareous stones (limestones), dolomitic stones (dolostones or unburnt dolomites) and/or magnesite stones which are calcined into quicklime, quick dolime and/or magnesia.

The calcination reaction of limestone into quicklime is :

CaCO₃ (solid) + heat ←→ CaO (solid)+ CO₂ (gas)

This reaction is endothermic and reversible. Below 900°C lime and CO₂ will easily recombine. But from a temperature of the order of 900°C the starting stones give off a significative volume of CO₂ during their decarbonation. In order to obtain such a decarbonation, the temperature must consequently be significatively increased in the calcining zone. Today this increase is mainly obtained by combustion of a fuel, frequently fossil, in presence of an oxidizer as air. In turn this fuel combustion contributes also to an important release of CO₂. Globally the current calcination methods actively participate in increasing the greenhouse effect.

During the fuel combustion a direct contact of the flame with the preheated carbonated mineral stones also results in possible local overheat in the calcination zone and the possibility that the flue gas would contaminate the calcined material. A prior careful selection of the fuel is required to maintain a high quality of the calcined material, notably while avoiding high sulphur fuels. Even with selected fossil fuels, the calcined material reactivity will be affected by the fuel ash and some minor pollutants.

The object of the present invention is to remedy the problem of significant CO₂ emissions of ASK kilns, without modifying substantially their functioning and by making little or no changes to their structure. Another object is to avoid as much as possible overheat of the calcined material and introduction of impurities in this material and in the gaseous effluent exiting from the kiln. The main object of the calcination kilns must obviously be maintained, i.e. the production of a calcined material of high quality and purity.

In order to solve these problems, according to the invention a method as above indicated further comprises, outside the kiln, a first heating step of a gas by means of at least one plasma torch for producing a lower heated gas, and a first step for mixing said lower heated gas with a control gas which is not heated by the at least one plasma torch for controlling a temperature of a first gaseous mixture which is said lower hot gas injected into the kiln at the second level of the annular space, the controlled temperature allowing a calcining of the carbonated mineral stones.

The invention relies mostly on externalizing the energy supply while heating a gas with a plasma torch, which is a CO₂ neutral electrical solution. The heated gas is partially broken down at high temperature in an electric arc, but mostly recombined in the process.

No fuel is still necessary for a combustion inside the kiln at the lower level. Consequently, no additional pollutant, in particular no CO₂ from a combustion, will be emitted apart the minor ones contained in the stones. No ash will be produced resulting to a pure decarbonated material. No more direct contact of the stones with a flame is to fear. The appropriate temperature of the heated gas from the plasma torch is controlled very easily by means of the step of mixing, leading to a high quality of lime.

According to particular embodiments of the process of the invention, a) the lower heated gas which is heated by at least one plasma torch is selected among the group consisting of air, N₂, CO₂, steam, noble gas and their mixtures and the control gas is comprised of recirculated gaseous stream containing said heated cooling air or b) the lower heated gas which is heated by at least one plasma torch is comprised of recirculated gaseous stream containing said heated cooling air and the control gas is selected among the group consisting of air, N₂, CO₂, steam, and their mixtures or c) the lower heated gas which is heated by at least one plasma torch as well as the control gas are comprised of recirculated gaseous stream containing said heated cooling air.

Advantageously, during the first heating step, air and/or water is additionally introduced in the at least one plasma torch and /or mixed in the first gaseous mixture.

According to an embodiment of the present invention, the process comprises, outside the kiln, a second heating step of a gas by means of at least one plasma torch for producing an upper heated gas, and a second step for mixing said upper heated gas with an adjusting gas which is not heated by the at least one plasma torch for adjusting a temperature of a second gaseous mixture which is said upper hot gas introduced at the first level of the annular space, the adjusted temperature allowing a preheating of the carbonated mineral stones. No fuel is still necessary for a combustion inside the kiln resulting in a substantial reduction of the emitted CO₂. The process does not more necessitate any consumption of fossil fuel.

Advantageously, the process comprises a step of cooling the shell of the internal cylinder by secondary air and extracting heated secondary air from the kiln.

According to particular embodiments of the process of the invention, that a) the upper heated gas which is heated by at least one plasma torch in the second heating step is selected among the group consisting of air, N₂, CO₂, steam, noble gas and their mixtures and the adjusting gas is comprised of said heated secondary air or b) the upper heated gas which is heated by at least one plasma torch is comprised of said heated secondary air and the adjusting gas is selected among the group consisting of air, N₂, CO₂, steam, and their mixtures or c) the upper heated gas which is heated by at least one plasma torch as well as the adjusting gas are comprised of said heated secondary air.

Preferably, during the second heating step, air and/or water is additionally introduced in the at least one plasma torch and /or mixed in the second gaseous mixture.

According to an embodiment of the invention, said upwards draft and said aspiration of the aspiration step are so equilibrated that a first part of the lower hot gas introduced into the annular space is upwards drawn in counter-current of the stones to calcine and a second part of the lower hot gas is supplied downward the bottom of the annular space, in co-current with the mineral stones to calcine, and thereafter aspired inside the inner cylinder, while forming with said cooling air and CO₂ from the decarbonation in the co-current calcination zone said gaseous stream containing said heated cooling air. According to another embodiment of the invention, said upwards draft and said aspiration of the aspiration step are so equilibrated that the totality of the lower hot gas introduced into the annular space is submitted to the upwards draft, the gaseous stream aspired in the inner cylinder comprising only cooling air.

According to a preferential embodiment of the process according to the invention, said lower and upper hot gas which are drawn toward the top of the kiln form a gaseous stream which is partially recovered out of the kiln before the exhaust of the gaseous effluent at the top of the kiln and the process further comprises a heat exchange between this recovered gaseous stream and a gas to heat by means of at least one plasma torch.

The present invention concerns also an annular shaft kiln for calcining carbonated mineral stones. Currently such a kiln comprises
- an outer cylinder,
- an inner cylinder, forming an annular space with the outer cylinder,
- material inlet means for feeding said carbonated mineral stones at the top of the kiln into the annular space,
- upper gas injection means at a first level of the annular space, provided for injecting an upper hot gas,
- lower gas injection means at a second level of the annular space lower than the level of the first gas injection means, provided for injecting a lower hot gas,
- a cooling air inlet, provided at the bottom of the annular space for cooling a decarbonated calcined material,
- material discharge means at the bottom of the kiln for discharging the decarbonated calcined material out of the kiln,
- upper gas outlet means at the top of the kiln for exhausting a gaseous effluent into a removal duct,
- return vents in the inner cylinder at a third level lower than said second level, through which a gaseous stream containing the cooling air heated in contact with the decarbonated calcined material is sucked from the annular space into the inner cylinder, and
- means for recirculating said gaseous stream containing the heated cooling air from the inner cylinder at least partially to the lower gas injection means.

According to the invention such a kiln equipped with at least one plasma torch for heating a gas and with, as lower gas injection means, at least one lower mixing chamber wherein the heated gas is mixed with a control gas for providing a gaseous mixture which is said lower hot gas to inject having a controlled temperature equal or higher than the temperature of calcination of the loaded mineral stones.

According to particular embodiments of the kiln according to the invention, a) the at least one lower mixing chamber is connected to the at least one plasma torch and to said means for recirculating said gaseous stream containing the heated cooling air, said gas heated by said at least one plasma torch being mixed in said at least one lower mixing chamber with recirculated gaseous stream containing the heated cooling air as control gas, for providing said lower hot gas to inject having a controlled temperature equal or higher than the temperature of calcination of the loaded mineral stones or b) the at least one lower mixing chamber is connected to an external gas source, for providing control gas, and to the at least one plasma torch which is connected to said means for recirculating said gaseous stream containing heated cooling air, said control gas being mixed in said at least one lower mixing chamber with said recirculated gaseous stream heated by the at least plasma torch, for providing said lower hot gas to inject having a controlled temperature equal or higher than the temperature of calcination of the loaded mineral stones or c) the at least one lower mixing chamber is connected to the at least one plasma torch and to said means for recirculating said gaseous stream containing the heated cooling air, the at least one plasma torch being also connected to the means for recirculating said gaseous stream containing the heated cooling air, a part of the recirculated gaseous stream containing the heated cooling air which has been heated by the at least one plasma torch being mixed in said at least one lower mixing chamber with, as control gas, another part of said recirculated gaseous stream which has not been heated by the at least one plasma torch.

In a typical embodiment of the invention, there will be 4 to 6 external electrical furnaces and 4 to 6 lower mixing chambers.

According to a preferential embodiment, the kiln of the invention is equipped with at least one additional plasma torch for heating a gas and with, as upper gas injection means, at least one upper mixing chamber wherein the heated gas is mixed with an adjusting gas which has not been heated by the at least one additional plasma torch for providing a gaseous mixture which is said upper hot gas to inject having an adjusted temperature allowing a preheating of the loaded mineral stones.

According to another embodiment, the kiln of the invention is equipped with at least one plasma torch for heating a gas and with, as upper gas injection means, at least one upper mixing chamber wherein the heated gas is mixed with an adjusting gas which has not been heated by the at least plasma torch for providing a gaseous mixture which is said upper hot gas to inject having an adjusted temperature allowing a preheating of the loaded mineral stones. In such a kiln a plasma torch will replace each burner of a classical annular shaft kiln and a mixing chamber will replace each combustion chamber of said standard kiln. There is no structural modification of the kiln and such an adaptation is very easy and economic.

In a typical embodiment of the invention, there will be 4 to 6 additional external electrical furnaces and 4 to 6 upper mixing chambers.

Advantageously, the kiln comprises inlet means for secondary cooling air which are connected with the interior of the shell of the inner shaft, and outlet means able to extract the heated secondary cooling air out of the kiln.

According to an advantageous embodiment of the kiln of the invention a) the at least one upper mixing chamber is connected to the at least one additional plasma torch and to said outlet means able to extract said heated secondary air, said gas heated by said at least one additional plasma torch being mixed in said at least one upper mixing chamber with said heated secondary air as control gas, for providing said upper hot gas to inject having a controlled temperature equal or higher than the temperature of preheating of the loaded mineral stones or b) the at least one upper mixing chamber is connected to an external gas source, for providing control gas, and to the at least one additional plasma torch which is connected to said outlet means able to extract the heated secondary air, said control gas being mixed in said at least one upper mixing chamber with said heated secondary air heated by the at least one additional plasma torch, for providing said upper hot gas to inject having a controlled temperature equal or higher than the temperature of preheating of the loaded mineral stones or c) the at least one upper mixing chambers is connected to the at least one additional plasma torch and to said outlet means able to extract the heated secondary air, the at least one additional plasma torch being also connected to the said outlet means able to extract the heated secondary air, a part of the extracted heated secondary air which has been heated by the at least one additional plasma torch being mixed in said upper mixing chambers with, as control gas, another part of said extracted heated secondary air which has not been heated by the at least one additional plasma torch.

The invention concerns also a method for revamping a conventional annular shaft kiln for manufacturing an annular shaft kiln according to the present invention. Such a method comprises the following steps :
- removing burners in each combustion chambers arranged as upper gas injection means at a first level of the annular space of said conventional annular shaft kiln,
- removing burners in each combustion chambers arranged as lower gas injection means at a second level of the annular space of said conventional annular shaft kiln, which is lower than said first level,
- replacing each of said removed burners by a plasma torch able to heat a gas, in such a manner that the so heated gas be introduced into said combustion chambers,
- connecting each plasma torch with a source of gaz to heat and each combustion chamber with a source of control gas so that each combustion chamber of said classical annular shaft kiln becomes a mixing chamber wherein said heated gas is mixed with the control gas for providing a gaseous mixture to inject into the annular space which has a controlled temperature equal or higher than the temperature of calcination of the loaded mineral stones, at the lower level, and an adjusted temperature allowing a preheating of the stones at the upper level.

As it is to remark, only a replacement of burners by plasma torch within chambers already provided as combustion chambers and now used as mixing chambers is sufficient and necessary for modifying a classical kiln in a kiln which does not need combustion of fuel, particularly of fossil fuel.

Other features and details of the method and kiln according to the invention are indicated in the appended claims. Other particularities of the invention will also result from the non-limiting description given below, with reference to the drawings.
Figure 1 illustrates schematically a classical annular shaft kiln according to the prior art.
Figure 2 illustrates schematically an embodiment of a kiln according to the invention.

In the figures, identical or similar elements have the same references.

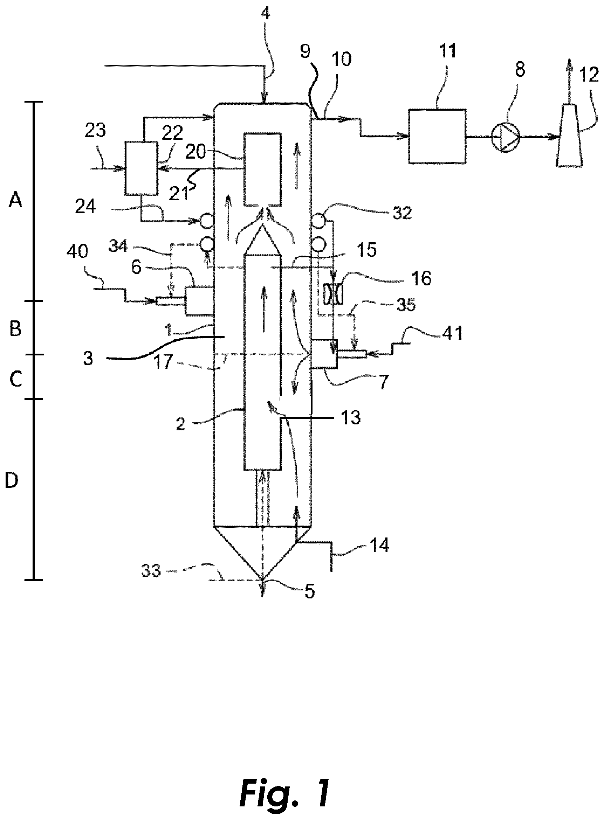

The kiln illustrated on Fig. 1 comprises an outer cylinder 1 and an inner cylinder 2 which form an annular space 3 wherein carbonated mineral stones descend by gravity. The stones are introduced at the top of the kiln at the material inlet 4 and a decarbonated calcined material is collected by the discharge 5.

The fuel fumes are injected at two levels by means of burners arranged in combustion chambers 6 and 7 ( 4 to 6 combustion chambers according to the kiln capacity). In the kiln of Fig.1 the totality of the fumes of the chambers 6 and a part of the fumes of the chambers 7 are drawn upwards by a fan 8, i.e. in countercurrent of the displacement of the material to calcine. They form of a gaseous effluent which is exhausted from the kiln by the upper outlet 9 , the removal duct 10, a treatment unit 11 and a stack 12. So the descending stones are preheated by heat exchange in the preheating zone A and calcined in a countercurrent calcination zone B. The other part of the hot gas issued from the lower mixing chambers 7 is aspired toward the bottom of the kiln by a reduced pressure provided at return vents 13 arranged in the inner cylinder at a level lower than the mixing chambers 7. In this zone C a co-current calcination of the stones takes place.

A cooling air inlet 14 is provided at the bottom of the annular space. The cooling air flows in counter-current of the decarbonated calcined material in a cooling zone D wherein it is so progressively heated. In the kiln of Fig.1, through the return vents 13, a gaseous stream containing the cooling air heated in contact with the decarbonated calcined material and the part of the lower hot gas aspired toward the bottom is sucked from the annular space 3 to the inner cylinder 2.

Via several recirculation ducts 15 the gaseous stream containing the heated cooling air is extracted from the inner cylinder 2 by means of aspiration means, such as eductors 16 (one eductor for each lower mixing chamber) and is recirculated at the level of the lower combustion chambers 7. The equilibrium between the draft toward the top and the aspiration toward the bottom is represented by the broken line 17.

This kiln further comprises an upper cylinder 20 which takes off a fraction of the gaseous effluent flowing to the top. Via a recovering duct 21 this gaseous fraction is introduced in an heat recovering means 22 wherein an heat exchange takes place between the recovered gaseous fraction and a driving air supplied by a feeding duct 23. The heated driving air is supplied via transfer ducts 24 to the eductors 16 in order to allow their functioning. The cooled fraction of gaseous effluent is removed toward the top of the kiln and the stack.

The fuel introduced in the combustion chambers 6 and 7 may be a solid fuel, as coke coal, or a biomass or a fluidic fuel such natural gas, hydrogen, and so on. The fuel is transferred to the burners of the chambers 6 via supplying ducts 40 and to the burners of the chambers 7 via supplying ducts 41.

In the upper combustion chambers 6, the oxidizer is air. Here this air is the cooling air of the shell of the inner shaft 2 which is supplied by the feeding duct 33 and is progressively heated during its climb in the inner shaft while being recycled as oxidizer to the burners of the combustion chambers via the recycling ducts 34 and optionally35. In the lower combustion chambers the oxidizer is comprised of a mixture of the downwards sucked fumes and of the heated cooling air. By means of the eductors 16 this mixture is extracted from the inner cylinder and recirculated into the combustion chambers 7 via the recirculation ducts 15.

Each eductor 16 works by means of the driving air which is supplied by the feeding duct 23, heated in the heat recovering unit 22 and thereafter furnished to the eductors 16 by means of the transfer ducts 24.

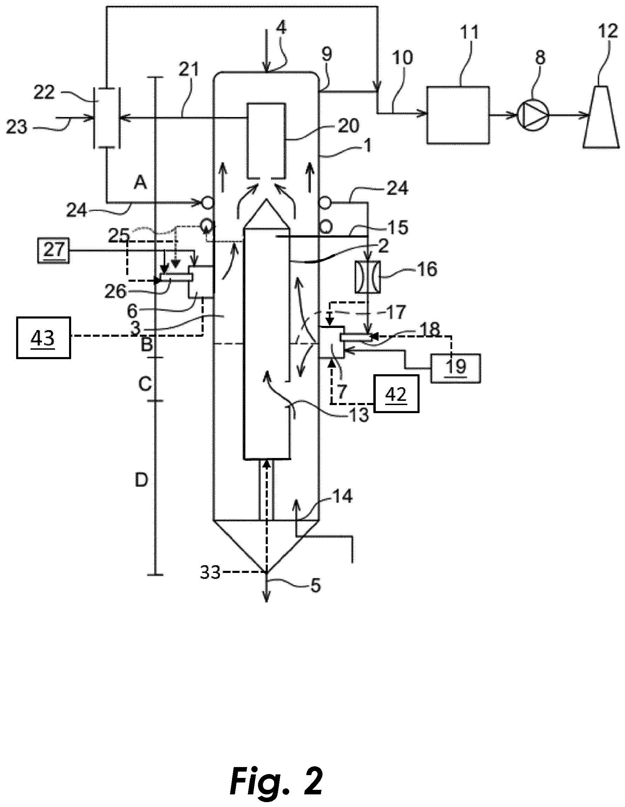

The kiln according to the invention illustrated on Fig.2 is very similar to the kiln of the Fig.1. Here the main difference is that there is no more combustion of fuel, and particularly in the chambers 6 and 7. These chambers are now simply provided for mixing gas which are injected in the kiln under the form of a gas mixture at a controlled temperature for allowing a preheating or a calcining of the stones. No more burners are here necessary.

Upper gas injection means under the form of upper mixing chambers 6 are provided at a first level of the annular space for injecting into the annular space an upper hot gas.

Lower gas injection means under the form of lower mixing chambers 7 are provided at a second level of the annular space lower than the level of the chambers 6 for injecting a lower hot gas.

Hot gas is thus injected at two levels by means of several mixing chambers 6 and 7 (4 to 6 chambers according the capacity of the kiln). In a general manner 1/3 of the hot gas is injected in the annular space by means of the mixing chambers 6 and 2/3 by means of the mixing chambers 7.

The kiln of Fig.2 is divided in the same zones A, B, C ,D and the displacement of the material to calcine and of the gaseous streams is identical at the difference that the gaseous streams do not contain any fumes.

Here also cooling air inlet 14 is provided at the bottom of the annular space. The cooling air flows in the same manner n counter-current of the decarbonated calcined material in a cooling zone D wherein it is so progressively heated. As in the kiln of Fig.1, through the return vents 13, a gaseous stream containing the cooling air heated in contact with the decarbonated calcined material and the part of the lower hot gas aspired toward the bottom is sucked from the annular space 3 to the inner cylinder 2.

Via the same recirculation ducts 15 the gaseous stream containing the heated cooling air is extracted from the inner cylinder 2 by means of aspiration means, such as eductors 16 (one eductor for each lower mixing chamber) and is recirculated at the level of the lower mixing chambers 7.

At the difference of the kiln of Fig.1, the kiln of the invention is equipped with several lower plasma torches 18 (4 to 6 according to the capacity of the kiln) able to heat a gas. In the lower mixing chambers 7 the heated gas is mixed with a control gas for providing a gaseous mixture having a controlled temperature equal or higher than the temperature of calcination of the loaded mineral stones. The gas to heat may be comprised of the recirculated gaseous stream containing heated cooling air which has been extracted by the ducts 15 and the eductors 16. In the chambers 7 the heated gas is mixed with a control gas issued from a gas source 19 which has not been heated by a plasma torch 18 for providing a gaseous mixture having a controlled temperature which is injected into the annular space. Other arrangements may be conceived. For example the recirculated gaseous stream may be driven from the eductors directly into the chambers 7, as control gas, and the plasma torch is then supplied from a source 19 of a gas such as air, steam, CO₂, N₂. Another possibility is to heat the recirculated gaseous stream and to use as control gas a part of the same recirculated stream which has not been heated.

A supply of water or air may be necessary in the mixing chamber 7 and is injected therein from a separated source 42.

This kiln further comprises an upper cylinder 20 which takes off a fraction of the gaseous effluent flowing to the top. Via a recovering duct 21 this gaseous fraction is introduced in an heat recovering means 22 wherein an heat exchange takes place between the recovered gaseous fraction and a driving air supplied by a feeding duct 23. The heated driving air is supplied via transfer ducts 24 to the eductors 16 in order to allow their functioning. The cooled fraction of gaseous effluent is removed toward the stack.

As in the kiln of Fig.1, the kiln of Fig.2 is provided with several recirculation ducts 25, heated secondary cooling air is extracted from the shell of the inner shaft and is recirculated at the level of the upper mixing chambers 6.

The kiln of Fig.2 is equipped with several upper plasma torches 26 (4 to 6 according to the capacity of the kiln) able to heat a gas and with the upper mixing chambers 6 wherein the heated gas is mixed with an adjusting gas for providing a gaseous mixture having an adjusted temperature appropriate for preheating the loaded mineral stones. The gas to heat may be comprised of heated secondary cooling air which, after heating, is injected into upper mixing chambers 6. In these chambers the heated gas is mixed with an adjusting gas issued from a gas source 27 which has not been heated by a plasma torch 26. Other arrangements may be conceived. The heated secondary cooling air may be introduced directly into the mixing chambers, as adjusting gas, and the gas to heat by the plasma torches may be supplied from the external gas source 27. Another possibility may also be to heat a part of the heated secondary cooling air, as gas to heat by the plasma torches, and to use another part of the heated secondary cooling air, as adjusting gas.

In the kiln of fig.2 the relative positions of the lower mixing chambers 7 and the return vents 13 in the inner shaft are the same as in the kiln of Fig.1. However it is possible to conceive another arrangement wherein the relative position of the mixing chambers 7 which inject lower hot gas into the annular space and the return vents 13 through which the cooling gas is aspired is so provided that the equilibrium illustrated by the broken line 17 is located just under the mixing chambers 7. In this case the totality of the injected hot gas is drawn toward the top of the kiln, there is no co-current calcination and the heated gaseous stream aspired into the inner cylinder consists only of heated cooling air.

It results from the present comparison between a classical annular shaft kiln and a kiln of the invention that the structural differences are little and do not request expensive measures to revamp a known kiln to a kiln according to the invention and to profit of the very interesting advantages of the invention.

Obviously, the present invention is not limited to the disclosed embodiments and several modifications may be provided without being outside the scope of the appended claims.

## Claims

1. A process for calcining carbonated mineral stones in an annular vertical kiln having an outer cylinder and an inner cylinder forming an annular space, comprising:
- a loading step of carbonated mineral stones at the top of the kiln,
- an injection of an upper hot gas into the annular space at a first level thereof,
- an injection of a lower hot gas into the annular space at a second level lower than the first level,
- a preheating step in a preheating zone of said loaded carbonated mineral stones flowing downwardly in the annular space,
- a calcining step of said preheated carbonated mineral stones in a calcination zone located in the annular space below the preheating zone, said preheating and calcining steps of said carbonated mineral stones flowing downwardly in the annular space taking place successively in contact with the upper hot gas and the lower hot gas which are at least partially submitted to an upwards draft in counter-current of the carbonated mineral stones and exhausted from the top of the kiln under the form of a gaseous effluent,
- an introduction of cooling air at the bottom of the kiln,
- a cooling step in a cooling zone below the calcination zone of decarbonated calcined material flowing downwardly, with cooling air flowing in counter-current through said decarbonated calcined material and forming a heated cooling air,
- an aspiration step of said heated cooling air into the inner cylinder at a third level lower than said second level, under the form of a gaseous stream containing said heated cooling air,
- a recirculation of the gaseous stream containing said heated cooling air from the inner cylinder to said injection step of a lower hot gas, and
- a discharging step of the decarbonated calcined material from the bottom of the kiln, **characterized in that** said process further comprises, outside the kiln, a first heating step of a gas by means of at least one plasma torch for producing a lower heated gas, and a first step for mixing said lower heated gas with a control gas which is not heated by the at least one plasma torch for controlling a temperature of a first gaseous mixture which is said lower hot gas injected into the kiln at the second level of the annular space, the controlled temperature allowing a calcining of the carbonated mineral stones.

2. Process according to claim 1, **characterized in that** a) the lower heated gas which is heated by at least one plasma torch is selected among the group consisting of air, N₂, CO₂, steam, noble gas and their mixtures and the control gas is comprised of recirculated gaseous stream containing said heated cooling air or b) the lower heated gas which is heated by at least one plasma torch is comprised of recirculated gaseous stream containing said heated cooling air and the control gas is selected among the group consisting of air, N₂, CO₂, steam, and their mixtures or c) the lower heated gas which is heated by at least one plasma torch as well as the control gas are comprised of recirculated gaseous stream containing said heated cooling air.

3. Process according to claim 2, wherein, during the first heating step, air and/or water is additionally introduced in the at least one plasma torch and /or mixed in the first gaseous mixture.

4. Process according to anyone of claims 1 to 3, comprising, outside the kiln, a second heating step of a gas by means of at least one plasma torch for producing an upper heated gas, and a second step for mixing said upper heated gas with an adjusting gas which is not heated by the at least one plasma torch for adjusting a temperature of a second gaseous mixture which is said upper hot gas introduced at the first level of the annular space, the adjusted temperature allowing a preheating of the carbonated mineral stones.

5. Process according to anyone of claims 1 to 4 comprising cooling of the internal cylinder by secondary air and extracting heated secondary air from the kiln.

6. Process according to claim 5, **characterized in that** a) the upper heated gas which is heated by at least one plasma torch in the second heating step is selected among the group consisting of air, N₂, CO₂, steam, noble gas and their mixtures and the adjusting gas is comprised of said heated secondary air or b) the upper heated gas which is heated by at least one plasma torch is comprised of said heated secondary air and the adjusting gas is selected among the group consisting of air, N₂, CO₂, steam, and their mixtures or c) the upper heated gas which is heated by at least one plasma torch as well as the adjusting gas are comprised of said heated secondary air.

7. Process according to claim 6, wherein, during the second heating step, air and/or water is additionally introduced in the at least one plasma torch and /or mixed in the second gaseous mixture.

8. Process according to anyone of claims 1 to 7, wherein said upwards draft and said aspiration of the aspiration step are so equilibrated that a first part of the lower hot gas introduced into the annular space is upwards drawn in counter-current of the stones to calcine and a second part of the lower hot gas is supplied downward the bottom of the annular space, in co-current with the mineral stones to calcine, and thereafter aspired inside the inner cylinder, while forming with said cooling air and CO₂ from the decarbonation in the co-current calcination zone said gaseous stream containing said heated cooling air.

9. Process according to anyone of claims 1 to 7, wherein said upwards draft and said aspiration of the aspiration step are so equilibrated that the totality of the lower hot gas introduced into the annular space is submitted to the upwards draft, the gaseous stream aspired in the inner cylinder comprising only cooling air.

10. Process according to any one of claims 1 to 9, **characterized in that** said lower and upper hot gas which are drawn toward the top of the kiln form a gaseous stream which is partially recovered out of the kiln before the exhaust of the gaseous effluent at the top of the kiln and **in that** the process further comprises a heat exchange between this recovered gaseous stream and a gas to heat by means of at least one plasma torch.

11. Annular shaft kiln for calcining carbonated mineral stones, comprising
- an outer cylinder (1),
- an inner cylinder (2), forming an annular space (3) with the outer cylinder (1),
- material inlet means (4) for feeding said carbonated mineral stones at the top of the kiln into the annular space (3),
- upper gas injection means at a first level of the annular space, provided for injecting an upper hot gas,
- lower gas injection means at a second level of the annular space lower than the level of the first gas injection means, provided for injecting a lower hot gas,
- a cooling air inlet (14), provided at the bottom of the annular space for cooling a decarbonated calcined material,
- material discharge means (5) at the bottom of the kiln for discharging the decarbonated calcined material out of the kiln,
- upper gas outlet means (9) at the top of the kiln for exhausting a gaseous effluent into a removal duct (10),
- return vents (13) in the innercylinder (2) at a third level lower than said second level, through which a gaseous stream containing the cooling air heated in contact with the decarbonated calcined material is sucked from the annular space (3) into the inner cylinder (2), and
- means for recirculating said gaseous stream containing the heated cooling air from the inner cylinder (2) at least partially to the lower gas injection means (7),
**characterized in that** said kiln is equipped with at least one plasma torch (18) for heating a gas and with, as lower gas injection means, at least one lower mixing chamber (7) wherein the heated gas is mixed with a control gas for providing a gaseous mixture which is said lower hot gas to inject having a controlled temperature equal or higher than the temperature of calcination of the loaded mineral stones.

12. Annular shaft kiln according to claim 11, wherein a) the at least one lower mixing chamber (7) is connected to the at least one plasma torch (18) and to said means for recirculating said gaseous stream containing the heated cooling air, said gas heated by said at least one plasma torch (18) being mixed in said at least one lower mixing chamber (7) with recirculated gaseous stream containing the heated cooling air as control gas, for providing said lower hot gas to inject having a controlled temperature equal or higher than the temperature of calcination of the loaded mineral stones or b) the at least one lower mixing chamber (7) is connected to an external gas source (19), for providing control gas, and to the at least one plasma torch (18) which is connected to said means for recirculating said gaseous stream containing heated cooling air, said control gas being mixed in said at least one lower mixing chamber (7) with said recirculated gaseous stream heated by the at least plasma torch (18), for providing said lower hot gas to inject having a controlled temperature equal or higher than the temperature of calcination of the loaded mineral stones or c) the at least one lower mixing chamber (7) is connected to the at least one plasma torch (18) and to said means for recirculating said gaseous stream containing the heated cooling air, the at least one plasma torch being also connected to the means for recirculating said gaseous stream containing the heated cooling air, a part of the recirculated gaseous stream containing the heated cooling air which has been heated by the at least one plasma torch being mixed in said at least one lower mixing chamber with, as control gas, another part of said recirculated gaseous stream which has not been heated by the at least one plasma torch.

13. Annular shaft kiln according to claim 11 or 12, comprising at least one additional external electrical furnace equipped with at least one additional plasma torch (26) for heating a gas and with, as upper gas injection means, at least one upper mixing chamber (6) wherein the heated gas is mixed with an adjusting gas which has not been heated by the at least one additional plasma torch for providing a gaseous mixture which is said upper hot gas to inject having an adjusted temperature allowing a preheating of the loaded mineral stones.

14. Annular shaft kiln according to anyone of claims 11 to 13 further comprising inlet means for secondary cooling air which are connected with the interior of the shell of the inner shaft, and outlet means able to extract the heated secondary cooling air out of the kiln.

15. Annular shaft kiln according to claim 14, wherein a) the at least one upper mixing chamber is connected to the at least one additional plasma torch and to said outlet means able to extract said heated secondary air (25), said gas heated by said at least one additional plasma torch (26) being mixed in said at least one upper mixing chamber with said heated secondary cooling air as control gas, for providing said upper hot gas to inject having a controlled temperature equal or higher than the temperature of preheating of the loaded mineral stones or b) the at least one upper mixing chamber is connected to an external gas source (27), for providing control gas, and to the at least one additional plasma torch which is connected to said outlet means able to extract the heated secondary air, said control gas being mixed in said at least one upper mixing chamber with said heated secondary cooling air heated by the at least one additional plasma torch, for providing said upper hot gas to inject having a controlled temperature equal or higher than the temperature of preheating of the loaded mineral stones or c) the at least one upper mixing chambers is connected to the at least one additional plasma torch and to said outlet means able to extract the heated secondary cooling air, the at least one additional plasma torch being also connected to the said outlet means able to extract the heated secondary cooling air, a part of the extracted heated secondary air which has been heated by the at least one additional plasma torch being mixed in said upper mixing chambers with, as control gas, another part of said extracted heated secondary cooling air which has not been heated by the at least one additional plasma torch.

16. Method for revamping a conventional annular shaft kiln to manufacture an annular shaft kiln according to any of the claims 11 to 15, comprising the following steps :
- removing burners in each combustion chambers arranged as upper gas injection means at a first level of the annular space of said conventional annular shaft kiln,
- removing burners in each combustion chambers arranged as lower gas injection means at a second level of the annular space of said conventional annular shaft kiln, which is lower than said first level,
- replacing each of said removed burners by a plasma torch able to heat a gas, in such a manner that the so heated gas be introduced into said combustion chambers,
- connecting each plasma torch with a source of gas to heat and each combustion chamber with a source of control gas so that each combustion chamber of said classical annular shaft kiln becomes a mixing chamber wherein said heated gas is mixed with the control gas for providing a gaseous mixture to inject into the annular space which has a controlled temperature equal or higher than the temperature of calcination of the loaded mineral stones, at the lower level, and an adjusted temperature allowing a preheating of the stones at the upper level.
